# EUROPÄISCHE PATENTANMELDUNG

(11) **EP 3 848 311 A1**
(43) Veröffentlichungstag der Anmeldung: **14.07.2021**
(21) Anmeldenummer: 20150447.9
(22) Anmeldetag: 07.01.2020
(51) Int. Cl.: B65H 63/00

(54) **AUTOMATISCHE QUALITÄTSKONTROLLE VON SPULEN**

(71) Anmelder: LENZING AKTIENGESELLSCHAFT, 4860 Lenzing (AT)
(72) Erfinder: BAUMGARTINGER, Josef, 4841 Timelkam (AT)
(74) Vertreter: Grünecker Patent- und Rechtsanwälte PartG mbB

(57) **Zusammenfassung**

Die vorliegende Erfindung betrifft ein Verfahren zur Qualitätskontrolle von Spulen.

## Beschreibung

Die vorliegende Erfindung betrifft ein Verfahren zur Qualitätskontrolle von Spulen.

### Stand der Technik

Monofilamente und Multifilamentgarne, insbesondere auf der Grundlage von Cellulose werden in großem Maßstab hergestellt und in vielen Bereichen, wie Textilindustrie aber auch in technischen Bereichen, eingesetzt. Ein Beispiel derartigen Mono - und Multifilamente sind Filamentgarne, die nach dem Lyocellverfahren aus einer Zusammensetzung von Cellulose in einem Lösungsmittel, üblicherweise eine Mischung aus Wasser und N-Methylmorpholin-N-oxid (NMNO), hergestellt werden. Nach dem Spinnen und unterschiedlicher Nachbehandlungen, werden sowohl Monofilamente als auch Multifilamente zu Spulen auf Hülsen aufgewickelt und anschließend, vor der Weiterverwendung (wie Verpackung und Versand an Abnehmer) gelagert. Von den produzierten Filamenten oder Garnen werden typischer Weise Proben entnommen und verschiedene Parameter evaluiert. Aber auch für die auf Spulen aufgewickelten Filamente und Garne ist eine Qualitätskontrolle notwendig.

Aufgrund der hohen Produktionsgeschwindigkeiten fallen dabei in einer Lyocell-Anlage pro Tag ggf. mehrere Tausend derartiger Spulen an, die dann der Nachkontrolle gewünschter Eigenschaften zugeführt werden müssen. Dadurch werden einerseits Qualitätsmerkmale der Spulen quantifiziert und stehen dann zur Charakterisierung der Spulen (also dem Grunde nach der auf den Spulen aufgewickelten Filamentgarnen) zur Verfügung. Gleichzeitig erlaub eine zeitnahe Evaluierung auch eine Rückmeldung an den Produktionsprozess, da sichtbare Filamentgarndefekte an die Produktion zurückgemeldet werden könne, so dass im Produktionsprozess, soweit notwendig eingegriffen werden kann.

Derzeit werden derartige Spulenkontrollen manuell durchgeführt, d.h. besonders geschultes Personal unterzieht die einzelnen Spulen einer visuellen Fehlerkontrolle. Dies ist eine hochspezialisierte Aufgabe, da in möglichst kurzer Zeit eine Oberfläche im Hinblick auf eine große Zahl an möglichen Fehlern und Defekten zu inspizieren und zu bewerten ist. Dies hat verschiedene Nachteile. So kommt es trotz der guten Schulung bei derartigen Kontrollen zwangsläufig zu Schwankungen bei der Bewertung und es besteht immer die Möglichkeit, dass Fehler und Defekte übersehen werden. Auch können durch die manuelle Handhabung während der Evaluierung Fehler oder Defekte auf den Spulen erzeugt werden. Gleichzeitig ist eine zeitnahe Evaluierung einer hohen Anzahl an Spulen oft nicht möglich, insbesondere in den kontinuierlich betriebenen Produktionsanlagen. So kommt es entweder zu einem zeitlichen Versatz zwischen Produktion und Evaluierung (was beispielsweise eine zeitnahe notwendige Rückmeldung an die Produktionskontrolle unmöglich macht), oder es werden gar nicht alle Spulen evaluiert (es werden nur eine gewisse Anzahl an Spulen geprüft, die nach der Erfahrung mit der jeweiligen Produktionsanlage statistisch aussagekräftige Daten liefern). Dies ist insbesondere aufgrund der immer steigenden Anforderungen an Dokumentation, auch gegenüber Abnehmern, nicht länger vertretbar. Hier wird inzwischen eine lückenlose Evaluierung und Dokumentation der Evaluierungsergebnisse gefordert. Dies ist auch im Hinblick auf die Möglichkeiten eigenen objektiven Fehlererfassung für Produktionsanlagen vorteilhaft.

### Aufgabe der vorliegenden Erfindung

Es ist daher die der vorliegenden Erfindung zugrundeliegende Aufgabe, diese Nachteile aus dem Stand der Technik zu überwinden.

### Figuren

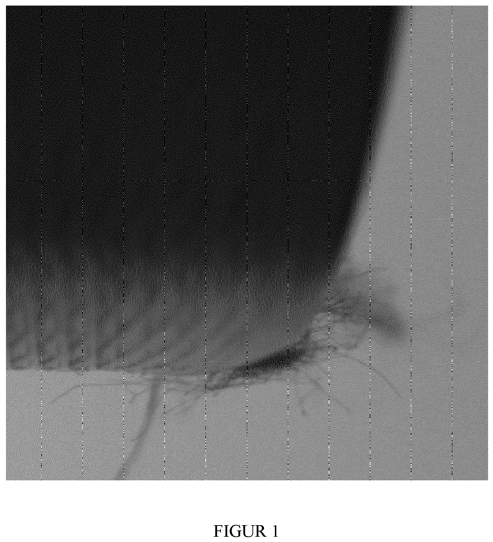

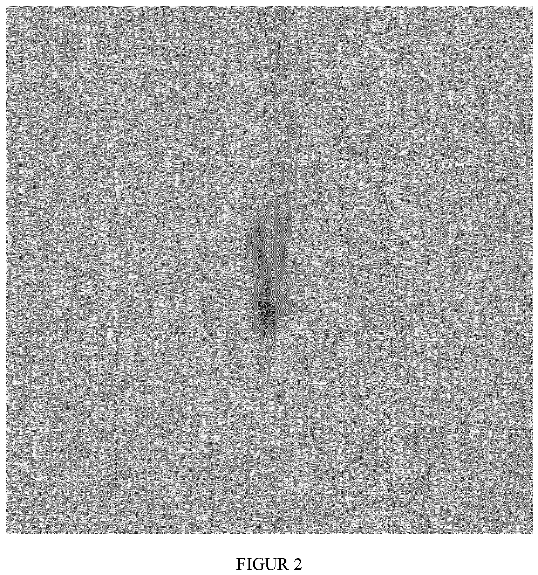

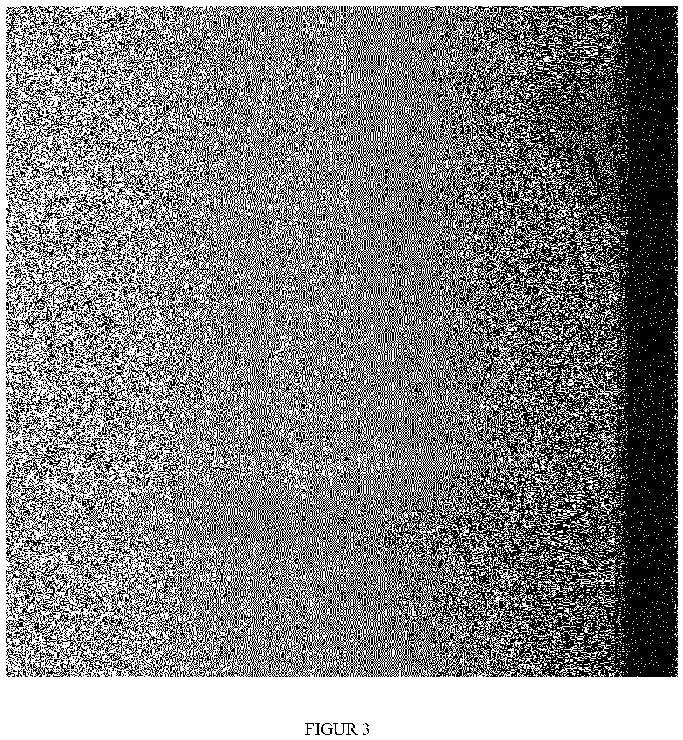

Figuren 1 bis 3 zeigen typische Fehlerarten, die mit dem erfindungsgemäßen System und Verfahren detektiert werden können.
Figur 1 zeigt die Fehlerart Kapillarbruch.
Figur 2 zeigt die Fehlerart Kontamination
Figur 3 zeigt die Fehlerart Beschädigung der Spule

### Kurze Beschreibung der vorliegenden Erfindung

Die vorliegende Erfindung stellt daher ein Verfahren nach Anspruch 1 zur Verfügung. Bevorzugt Ausführungsformen sind in den Unteransprüchen als auch in der nachfolgenden Beschreibung nagegeben.

### Detaillierte Beschreibung der Erfindung

Die vorliegende Erfindung stellt ein Verfahren zur Qualitätskontrolle von Spulen (also auf Hülsen aufgewickelten Monofilamenten oder Multifilamente sog. Filamentgarne) zur Verfügung, bei dem die Oberflächen der Spulen mit optischen Systemen erfasst und die dadurch gewonnenen Daten automatisch mit festgelegten Parametergrenzen abgeglichen und die Qualität der Spulen so bestimmt wird. Oberfläche im Sinne der vorliegenden Erfindung sind sowohl die Stirn- und Fußflächen der Spulen als auch die Mantelfläche. Die Begutachtung der Stirn- und Fußflächen dient insbesondere der zuverlässigen Erfassung von Fehlern am Spulenkern.

Es ist bevorzugt, wenn die Erfassung der Oberfläche so erfolgt, dass die jeweils zu prüfende Spule bei der Erfassung um ihre Längsachse rotiert. So kann mit statischen optischen Systemen einfach und zuverlässig die gesamte Oberfläche der Spule erfasst werden. Systeme, die eine derartige Rotationsbewegung der Spule ermöglichen sind bekannt. Gleichzeitig ist es bevorzugt, wenn auch das Einsetzen der Spulen direkt in derartige Systeme oder in ein vorgeschaltetes Ladesystem, wie zum Beispiel ein Revolver- / Karussell- / kontinuierliches Transportsystem usw., automatisch erfolgt. Dies vereinfacht die Prüfung großer Anzahlen an Spulen und vermeidet auch hier Fehler durch manuelle Handhabung. Darüber hinaus ermöglicht eine derartige Verfahrensführung nicht nur eine berührungslose Evaluierung an sich, sondern standardisiert auch sämtliche Berührungen der Spule beim Einsetzen in das System, ebenso wie beim Herausnehmen aus dem System.

Die optische Erfassung der Spulenoberfläche und der Abgleich mit festgelegten Standardwerten erlaubt eine schnelle und qualitativ immer gleichbleibende Bewertung der Spulenqualität. Hier hat es sich überraschend gezeigt, dass trotz der komplexen Aufgabenstellung (die im derzeitigen Verfahrensablauf, wie vorstehend ausgeführt, besonders geschultes Personal erfordert) die automatisierte Kontrolle und der Abgleich mit festgelegten Parametern durch ein geeignetes System der Datenauswertung, schnell und zuverlässig eine Evaluierung ermöglicht.

Erfindungsgemäß hat es sich gezeigt, dass dazu eine Kombination von zwei verschiedenen Arten an optischen Systemen notwendig sind, um eine zufriedenstellende Evaluierung zu ermöglichen. Einerseits notwendig ist ein optisches System, basierend auf mehrdimensionalen Laserscannern, das geeignet ist gröbere Defekte zu erkennen. Diese manifestieren sich insbesondere durch Abweichung der Spule von ihrer Normalkonfiguration. Darunter fallen insbesondere größere Beschädigungen, wie z.B. Dellen in der Spulenoberfläche (Mantelfläche), Abweichungen von der gewünschten Spulengeometrie, wie Sattelbildung oder seitliche Ringbildung, ebenso wie Hülsenfehler, also Defekte des Wickelkerns, die die Gesamtstruktur der Spule nachteilig beeinflussen (die gut über die Erfassung und Bewertung der Stirn- und Fußflächen erfolgt. Dazu geeignet sind insbesondere Systeme, die die Oberfläche der Spule abscannen und so, aufgrund der Rotation der Spule, die Erzeugung eines Profils der Spulenform ermöglichen. Geeignet sind hierzu beispielsweise Laserscansysteme. Die dabei erhaltene Profilform kann dann einfach mit der gewünschten Standardform der Spule verglichen und jede Abweichung entsprechend bewertet werden.

Anderseits notwendig ist ein bildaufnehmendes optisches System (Kamera), das Bilder insbesondere der Mantelfläche aufnimmt, die dann die Evaluierung im Hinblick auf Fehler, wie Kontamination, Fingerabdrücke, Faser- oder Kapillarbrüche etc. ermöglichen. Werden derartige Systeme zusammen mit Lichtquellen eingesetzt, kann die Empfindlichkeit weiter gesteigert und auch zusätzliche Parameter, wie Farbton der Spule, erfasst werde. Geeignet sind hier Lichtquellen, die einerseits Licht spezifischer Wellenlänge (oder spezifischer Wellenlängenbereiche) und/oder Lichtmuster aussenden, wie pulsierende Beleuchtung, Variation der Wellenlängen, Variation der Lichtintensitäten und hochfrequente Änderung der Beleuchtung. Darüber lassen sich, wie vorstehend ausgeführt, einerseits die Empfindlichkeit (und damit verbunden die Genauigkeit) der Evaluierung verbessern, anderseits können auch weitere Parameter geprüft werden (beispielsweise über den Abgleich von mit Standardfarbmustern oder Farbtönen). So werden Bilder der Oberfläche aufgenommen und diese (als zweidimensionales Bild) erneut mit einem gewünschten Standardzustand verglichen. Darüber können kleinere, aber ebenfalls hochrelevante Fehler und Defekte, die stärker mit den zu evaluierenden Filamentgarn verknüpft sind, erkannt und quantifiziert werden. Darunter fallen insbesondere Defekte wie Fingerabdrücke, Kontamination mit Staub, Haaren, Insekten etc., sowie Flusen, Brüche, Spangen und ebenfalls Hülsenfehler. Dazu lassen sich, wie bereits vorstehend ausgeführt, bilderzeugende Systeme einsetzen, wie Kameras.

Prinzipiell ist es also möglich, lediglich durch den Einsatz zweier optischer Systeme eine weitgehend automatisierte Qualitätskontrolle von Spulen durchzuführen. Dazu wird eine Spule, wie vorstehend angeführt, zunächst bevorzugt automatisch in das Spulenkontrollsystem geladen und anschließend berührungslos mit optischen Systemen erfasst. Die erhaltenen Daten erlauben eine Bewertung der Qualität der Spule (Art und Anzahl der Fehler), was entweder manuell nach Visualisierung der Messdaten durch entsprechendes Personal erfolgt oder automatisch durch Abgleich mit festgelegten Standardwerten erfolgt. Durch den Einsatz selbstlernender Auswertungseinheiten kann ein derartiges System die Genauigkeit der Bewertung von Spulen im laufenden Betrieb stetig erhöhen. Dabei wird, bei Einsatz von lernfähigen Algorithmen, ein automatisch agierender Klassifikator erhalten.

Selbstverständlich können nicht nur zwei, sondern auch eine höhere Anzahl an optischen Systemen zur Erfassung der Spulenoberfläche eingesetzt werden. Damit kann die Genauigkeit der Bewertung erhöht werden, da beispielsweise unterschiedliche Kamerasysteme unterschiedliche Empfindlichkeiten für unterschiedliche Arten an Defekten und Fehlern aufweisen. Durch den Einsatz verschiedener Lichtquellen zur Beleuchtung/Ausleuchtung der Spule bei der optischen Erfassung können beispielsweise Abweichungen oder Variationen im Farbton erkannt werden. Mit verschiedenen Kameraarten können verschiedene Arten an Bildern der Spulenoberfläche gewonnen werden, so dass das Verfahren besser auf unterschiedliche Fehlerarten angepasst werden kann.

Dadurch, dass die Auswertung, insbesondere bevorzugt durch selbstlernende Datenauswertungssysteme erfolgt, können mit großer Genauigkeit statistische Auswertungen und Protokollierungen der Fehler der untersuchten Spulen vorgenommen und gespeichert werden. Dies führt zum automatisierten Aufbau einer Datenbibliothek, die auch für den weiteren Einsatz der Filamentgarne auf den Spulen hilfreich ist. Gleichzeitig, wenn die Evaluierung der Spulen zeitnah zur Herstellung des jeweiligen Filamentgarns erfolgt, kann ein derartiges System auch zur automatisierten Produktionskontrolle beitragen. So können, abhängig von der Art der detektierten Fehler auf/an den Spulen, entsprechende Fehlermeldungen an die jeweiligen Produktionsanlagen übermittelt werden, Diese können dann schnell auf derartige Fehlermeldungen reagieren. So trägt das erfindungsgemäße System nicht nur zur Verbesserung der Qualitätskontrolle der Spulen bei, sondern leistet auch einen Beitrag zur Qualitätskontrolle des gesamten Produktionsablaufs.

Durch das erfindungsgemäße Verfahren können sowohl Spulen mit Monofilamenten als auch Spulen mit Multifilamenten evaluiert werden. Auch können Spulen unterschiedlicher Größe mit dem Verfahren evaluiert werden, einschließlich sehr großer Spulen, bei denen die derzeitige manuelle Kontrolle allein aufgrund der Abmessungen und des Gewichts der Spule problematisch ist.

Die Vorteile, die mit dem erfindungsgemäßen Verfahren zu realisieren sind, lassen sich wie folgt darstellen:
1.) Durch die Möglichkeit Spulen automatisiert in das Kontrollsystem ein- und auszuführen, lassen sich große Stückzahlen an Spulen handhaben.
2.) Durch den Einsatz einer Vorrichtung, die die zu evaluierenden Spulen um die Längsachse (Wickerkern) rotieren lässt, ist es möglich die zur Evaluierung eingesetzten optischen System fest anzubringen, so dass hier gleichbleibende Bedingungen bei der Evaluierung herrschen.
3.) Durch die Erfassung von Messdaten an rotierenden Spulen können zweidimensionale Profile der Spule als solche generiert werden, so dass einfach gröbere Wickelfehler oder Spulendefekte, beispielsweise hervorgerufen durch defekte Wickelkerne erkannt werden können.
4.) Durch die Kombination von zwei optischen Systemen, wie vorstehend beschrieben, optional in Kombination mit Lichtquellen, lassen sich die relevanten zu evaluierenden Fehler und Defekte ausreichend sicher und reproduzierbar erkennen, so dass auf den Faktor "Mensch" und die damit zwangsläufig verbundenen Fehlerquellen (Nichterkennung von Fehlern) und Schwankungen bei der Bewertung von erkannten Fehlern ausgeschlossen werden kann.
5.) Das System erlaubt die vollautomatische Evaluierung einer großen Anzahl an Spulen, so dass hier weder eine große zeitliche Verzögerung bei der Evaluierung im Vergleich mit dem Produktionsprozess auftritt noch auf die Evaluierung einzelner Spulen verzichtet werden muss.
6.) So können quasi in Echtzeit Störungswarnungen an die Produktionsanlagenkontrolle übermittelt werden.
7.) Die Fehlererkennung und Fehlerbewertung ist qualitativ und quantitativ objektivierbar, so dass hier konsistente Daten über lange Produktionszeiträume gewonnen werden können.
8.) Durch den Einsatz selbstlernender Systeme zur Messdatenauswertung und Klassifikation kann die Evaluierung der Spulen sich weiter fortentwickeln, wodurch das System fortlaufend zuverlässiger und robuster wird. Die gewonnenen Daten eignen sich zur Bereitstellung einer elektronischen Bibliothek der Daten, so dass insbesondere im Hinblick auf den weiteren Einsatz der Spulen eine optimierte Auswahlmöglichkeit gegeben ist. So können automatisch vom System beispielsweise qualitativ sehr ähnliche Spulen (beispielsweise im Hinblick auf Wickelfehler) einfach gefunden werden (und dann beispielsweise für eine gemeinsame Weiterverwendung zusammengruppiert werden).
9.) Durch Erhöhung der Anzahl der zur Evaluierung eingesetzten optischen Systeme kann die Fehlererkennung und Fehlerbewertung weiter ausdifferenziert werden - es können unterschiedliche Fehlerarten besser erkannt und quantifiziert werden, es können mehr Daten im Hinblick auf Produktvariation gewonnen werden.

## Patentansprüche

1. Verfahren zur Qualitätskontrolle von Spulen, **dadurch gekennzeichnet, dass** die Spulen mit mindestens zwei optischen Systemen evaluiert werden, wobei ein System einen Laserscanner umfasst, zur Erfassung von Daten zur Erzeugung eines Profils der Spule, und das mindestens eine andere System eine optische Kamera zur Erfassung von Daten zur Erzeugung eines zweidimensionalen Bilds der Spulenüberfläche umfasst.

2. Verfahren nach Anspruch 1, wobei die Spule bei der Messung durch die optischen Systeme um ihre Längsachse rotiert.

3. Verfahren nach Anspruch 1 oder 2, wobei die erhaltenen Messdaten mittels eines Datenauswertesystems mit Standardwerten zur Bewertung der Qualität der Spule abgeglichen werden.

4. Verfahren nach einem der Ansprüche 1 bis 3, wobei die Spulen bei der Datenerfassung mit Licht spezifisch einzustellender Wellenlänge und verschiedener einstellbarer Lichtmuster beleuchtet werden.

5. Verfahren nach einem der Ansprüche 1 bis 4, wobei die Spulen automatisch in das System zur Qualitätskontrolle eingeführt und automatisch nach Abschluss der Messung wieder aus dem System ausgeführt werden.

6. Verfahren nach einem der Ansprüche 1 bis 5, wobei die durch die Evaluierung erhaltene Qualitätsbewertung, bei Überschreiten bestimmter Grenzbedingungen, automatisiert Warnmeldungen an die Produktionskontrolle übermittelt.

7. Verfahren nach einem der Ansprüche 1 bis 6, wobei die Spulen Filamentspulen, oder Garnspulen sind.

8. Verfahren nach einem der Ansprüche 1 bis 7, wobei mehr als zwei optische Systeme eingesetzt werden.

9. Verfahren nach einem der Ansprüche 1 bis 8, wobei das zur Bewertung der erhobenen Messdaten eingesetzte System ein selbstlernendes System ist.
